# EUROPÄISCHE PATENTSCHRIFT

(11) **EP 0 642 010 B1**
(45) Veröffentlichungstag und Bekanntmachung des Hinweises auf die Patenterteilung: **18.09.1996**
(21) Anmeldenummer: 94111838.2
(22) Anmeldetag: 29.07.1994
(51) Int. Cl.: G01N 3/52

(54) **Verfahren zur Ermittlung der Härte von band- oder drahtförmigem Durchlaufmaterial und Vorrichtung zur Durchführung des Verfahrens**
Method for determining the hardness of material in the form of a continuous web or wire
Méthode pour la détermination de la dureté d'un matériau en forme de bande ou de fil continu

(30) Priorität: 02.09.1993 DE 4329625
(43) Veröffentlichungstag der Anmeldung: 08.03.1995
(73) Patentinhaber: KM Europa Metal Aktiengesellschaft, D-49023 Osnabrück (DE)
(72) Erfinder: Kortemeyer, Norbert, Dipl.-Ing., D-49084 Osnabrück (DE); Gebhardt, Jürgen, Dr.-Ing., D-49086 Osnabrück (DE)

(56) Entgegenhaltungen:
- DE-A- 2 054 505
- US-A- 2 318 993
- PATENT ABSTRACTS OF JAPAN vol. 4, no. 144 (C-027) 11. Oktober 1980 & JP-A-55 094 448 (NIPPON STEEL CORP) 17. Juli 1980
- PATENT ABSTRACTS OF JAPAN vol. 010, no. 264 (P-495) 9. September 1986 & JP-A-61 090 038 (SANMITSUKU TSUSHO KK;OTHERS: 01) 8. Mai 1986
- PATENT ABSTRACTS OF JAPAN vol. 010, no. 247 (P-490) 26. August 1986 & JP-A-61 076 931 (KAWASAKI STEEL CORP) 19. April 1986

## Beschreibung

Die Erfindung betrifft einerseits ein Verfahren zur Ermittlung der Härte von sich zwischen einer Behandlungsanlage und einem Aufwickelhaspel bewegendem band- oder drahtförmigen metallischen Durchlaufmaterial gemäß den Merkmalen im Oberbegriff des Patentanspruchs 1. Ein solches Verfahren läßt sich grundsätzlich aus Patent Abstracts of Japan, Vol.4, Nr.144 und JP-A-55-094448 entnehmen.

Andererseits richtet sich die Erfindung auf eine Vorrichtung zur Durchführung des Verfahrens gemäß dem Oberbegriff des Patentanspruchs 2.

Im Rahmen der Rekristallisationsglühung von Kupferband ist es bekannt, auf einem Coil sich befindendes Kupferband durch einen Durchlaufglühofen zu führen. Um eine möglichst gleichmäßige Härte der nacheinander durch den Durchlaufglühofen geführten Kupferbänder zu erzielen, werden bislang nach dem Passieren des Durchlaufglühofens jeweils Proben am Bandanfang und Bandende entnommen und diese Proben auf die Materialhärte hin untersucht. Dazu werden bekannte Verfahren, wie z.B. die nach Brinell oder Vickers angewendet. In Abhängigkeit von den Meßergebnissen können dann regelnde Eingriffe in den Fertigungsprozeß vorgenommen werden. Das heißt, es können die Ofentemperatur und/oder die Durchlaufgeschwindigkeit der Kupferbänder verändert werden. Diese Eingriffe sind aber nur zeitverzögert durchführbar, weil eine Probennahme praktisch nur am Bandanfang und Bandende möglich ist. Zwischenproben würden das Kupferband unbrauchbar machen. Mithin kann der Fertigungsprozeß in der Praxis nur kontrolliert und nicht aktiv geregelt werden. Außerdem erfordern Probenentnahme, Härtemessung, Protokollierung der Messungen usw. zusätzliche Arbeitskräfte. Ferner ist zu beachten, daß die Härtemessung in der Regel in einem Labor durchgeführt wird, das meistens nicht in der Nähe des Durchlaufglühofens angeordnet ist. (vgl. beispielsweise Patent Abstracts of Japan, Vol.10, Nr.247 und JP-A-61-076931)

Der Erfindung liegt ausgehend von den in den Oberbegriffen der Patentansprüche 1 und 2 beschriebenen Merkmalen die Aufgabe zugrunde, ein Verfahren und eine Vorrichtung zu schaffen, die eine Härtemessung an sich bewegendem Durchlaufmaterial erlauben.

Die Lösung des verfahrensmäßigen Teils dieser Aufgabe besteht in den kennzeichnenden Merkmalen des Patentanspruchs 1.

Die Härtemessung unter Anwendung der Kugelrücksprungmethode bei sich zwischen einer Behandlungsanlage und einem Aufwikkelhaspel bewegendem Durchlaufmaterial ermöglicht jetzt eine mehrfache Messung der Härte des Durchlaufmaterials in beliebigen Längenabschnitten, wobei aus mehreren Einzelmessungen ein Mittelwert gewonnen wird, der dann als elektronisches Signal zur Prozeßsteuerung herangezogen werden kann. Auf diesem Wege ist folglich nicht nur ein automatisches Härtemessen mit automatischer Protokollierung möglich, sondern es kann eine kontinuierliche Qualitätssicherung und Kontrolle während des gesamten Fertigungsprozesses gewährleistet werden. Insbesondere bei einer Behandlungsanlage in Form eines Durchlaufglühofens und Kupferband als Durchlaufmaterial kann der Durchsatz des Durchlaufglühofens gesteigert werden, da sowohl die Ofentemperatur als auch die Geschwindigkeit des Kupferbands optimal eingeregelt werden können. Jedes von einem Coil abgezogene und durch den Durchlaufglühofen geführte Kupferband kann individuell mit optimalen Einstellwerten gefahren werden, so daß die Härtestreuung (Steuerung der technologischen Eigenschaften) von Kupferband zu Kupferband merklich reduziert werden kann. Interne Versuche haben gezeigt, daß unter Anwendung des erfindungsgemäßen Verfahrens eine Reduzierung der Härtestreubreite um 50 % sowie eine Steigerung der Durchsatzleistung um 5 % erzielbar ist.

Die Anwendung der Kugelrücksprungmethode erweist sich im Rahmen des erfindungsgemäßen Verfahrens deshalb als besonders vorteilhaft, weil betriebsinterne Versuche ergeben haben, daß bei üblichen Geschwindigkeiten des Durchlaufmaterials von etwa 30 m/min keine Verfälschungen der Ergebnisse der Härtemessungen aufgrund der Relativbewegungen des Durchlaufmaterials zur auftreffenden Prüfkugel zu beobachten sind. Bei dem erfindungsgemäßen dynamischen Meßverfahren handelt es sich grundsätzlich um ein Vergleichsverfahren, welches naturgemäß vorher eingeeicht werden muß.

Hierbei ist es auch von Bedeutung, daß das Durchlaufmaterial straff auf dem rotierenden Auflager liegt und insofern die Prüfkugel im Scheitelpunkt des Auflagers den notwendigen Widerstand findet.

Was die Lösung des gegenständlichen Teils der der Erfindung zugrundeliegenden Aufgabe anlangt, so besteht diese im Kennzeichen des Patentanspruchs 2.

Danach wird zwischen der Behandlungsanlage und dem Aufwickelhaspel eine Auflagerrolle angeordnet, deren Achse sich quer zur Laufrichtung des Durchlaufmaterials erstreckt. Dabei werden sowohl vor der Auflagerrolle als auch nach der Auflagerrolle im geeigneten Abstand je eine Andrückrolle angeordnet, welche dafür sorgen, daß das Durchlaufmaterial bei definiertem konstanten Zug bogenförmig an die Auflagerrolle gepreßt wird. Dieser Umschlingungswinkel des Durchlaufmaterials liegt in einer Größenordnung von mindestens etwa 20°. Hierdurch wird eine sichere Auflage des Durchlaufmaterials auf der Auflagerrolle gewährleistet.

Im Scheitelpunkt der Auflagerrolle ist ein nach der Kugelrücksprungmethode wirksames Härteprüfgerät angeordnet. Dieses Härteprüfgerät besitzt eine Prüfkugel, die gezielt auf die Art des Durchlaufmaterials abgestellt ist. Die Prüfkugel ist unter Errichtung einer Federspannung in einer Bereitschaftsstellung fixierbar, aus der sie dann gezielt gelöst werden kann, um die Härtemessung durchzuführen. Hierbei werden die Aufprall- und Rückprallgeschwindigkeit berührungslos gemessen. Dazu kann in der die Prüfkugel aufnehmenden Halterung ein Permanentmagnet eingebaut sein, der während des Prüfschlags eine Spule durchfährt und während der Vor- und Rückwärtsbewegung elektrische Spannungen induziert, die sich proportional zu den Geschwindigkeiten verhalten. Die Meßwerte aus der Aufprall- und Rückprallgeschwindigkeit werden dann in einer Auswerteeinheit zu dem Härtewert verarbeitet. Dieser kann anschließend zur Regelung der Behandlungscharakteristik der Behandlungsanlage und/oder der Geschwindigkeit des Durchlaufmaterials herangezogen werden. Beispielsweise können die Temperatur eines Durchlaufglühofens und/oder die Laufgeschwindigkeit eines Kupferbands exakt geregelt werden. Auf diese Weise kann die Härtestreubreite des gesamten eine Behandlungsanlage passierenden Durchlaufmaterials deutlich reduziert werden.

Es kann darüber hinaus zweckmäßig sein, zwischen dem Härteprüfgerät und dem Aufwickelhaspel ein Walzgerüst anzuordnen, in dem mit definiertem Abwalzgrad noch ein Härtestich auf das Durchlaufmaterial, insbesondere auf ein Kupferband, gewalzt wird.

Um Beschädigungen des Durchlaufmaterials, insbesondere Kupferband, zu vermeiden, sind gemäß Patentanspruch 3 die Auflagerrolle und die Andrückrollen mit einem harten Kunststoff beschichtet.

Die Merkmale des Patentanspruchs 4 erlauben es, Härtemessungen an verschiedenen Stellen über die gesamte Breite des Durchlaufmaterials vorzunehmen. Hierbei ist es denkbar, daß das Härteprüfgerät mittels einer Gewindespindel von Hand quer zum Durchlaufmaterial verlagerbar ist. Vorstellbar ist aber auch ein Spindelantrieb über einen programmgesteuerten Reversiermotor, um während des Materialdurchlaufs gezielt verschiedene Meßpunkte anzufahren.

Die quer zur Achse der Auflagerrolle verlagerbare Konsole entsprechend den Merkmalen des Patentanspruchs 5 erlaubt es, das Härteprüfgerät jeweils dann in einen ausreichenden Abstand vom Durchlaufmaterial zu verlagern, wenn der Anfang oder das Ende des Durchlaufmaterials das Härteprüfgerät Passiert. Auf diese Weise wird eine Beschädigung des Härteprüfgeräts vermieden.

Gemäß den Merkmalen des Patentanspruchs 6 ist es von Vorteil, daß die Konsole durch einen Druckmittelzylinder relativ zu einem ortsfesten Widerlager verstellbar ist. Hierbei kann es sich bevorzugt um einen doppelt wirkenden Pneumatikzylinderhandeln. Dieser Druckmittelzylinder ist dann vorzugsweise mit dem Zylindergehäuse am ortsfesten Widerlager festgelegt und mit der Kolbenstange an die Konsole angeschlagen. Hierbei kann der Hub des Druckmittelzylinders feinfühlig eingestellt werden.

Die Merkmale des Patentanspruchs 7 erlauben es, das Härteprüfgerät programmgesteuert zu spannen, wobei bevorzugt ein doppelt wirkender Pneumatikzylinder zum Einsatz gelangen kann.

Entsprechend den Merkmalen des Patentanspruchs 8 ist der Abstand zwischen der Konsole und dem Tragkörper einstellbar und in der jeweils eingestellten Position fixierbar. Dies erlaubt eine äußerst feinfühlige Einstellung des Härteprüfgeräts relativ zum Durchlaufmaterial, insbesondere zu einem Kupferband.

Auch die Aktivierung der Prüfkugel aus ihrer Bereitschaftsstellung kann entsprechend den Merkmalen des Patentanspruchs 9 durch einen Druckmittelzylinder bewirkt werden, der vorzugsweise aus einem doppelt wirkenden Pneumatikzylinder besteht.

Die Erfindung ist nachfolgend anhand eines in den Zeichnungen dargestellten Ausführungsbeispiels näher erläutert. Es zeigen:
- Figur 1: im Schema eine Anlage zur Rekristallisationsglühung von Kupferband mit einer nachgeschalteten Vorrichtung zur Ermittlung der Härte des Kupferbands;
- Figur 2: in vergrößertem Maßstab einen vertikalen Querschnitt durch die Darstellung der Figur 1 entlang der Linie II-II und
- Figur 3: in nochmals vergrößerter Darstellung einen vertikalen Querschnitt durch die Darstellung der Figur 1 entlang der Linie III-III.

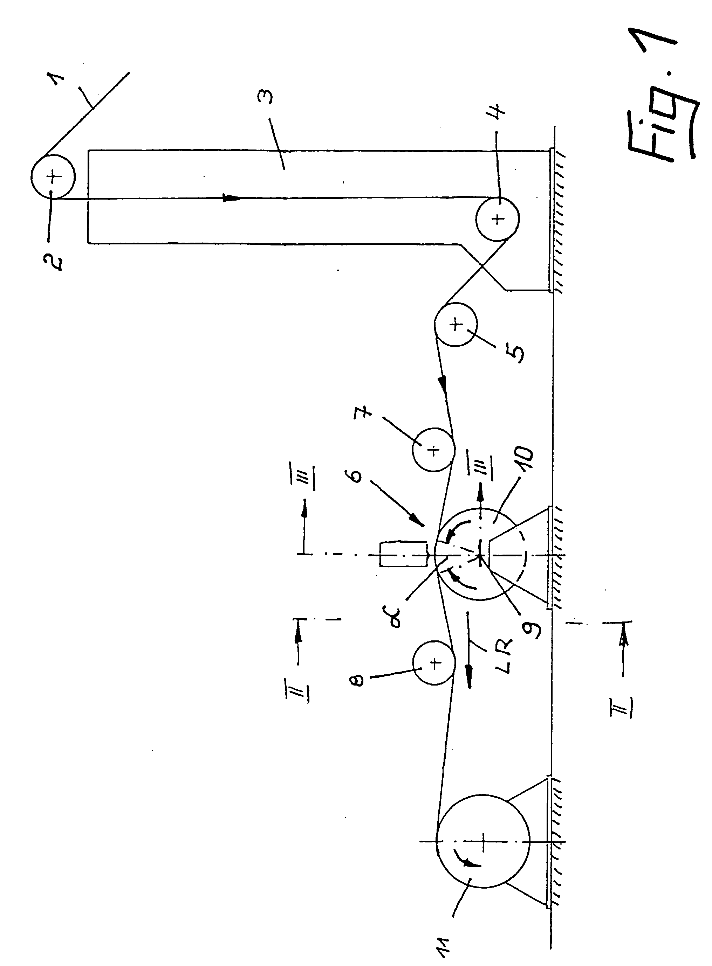

Mit 1 ist in der Figur 1 ein SF-Cu-Band bezeichnet, das von einem nicht näher dargestellten Coil mit einer aufgewickelten Länge von 1200 m abläuft. Das Kupferband 1 ist 1000 mm breit und 0,6 mm dick. Die Laufgeschwindigkeit des Kupferbands beträgt etwa 10 bis 40 m/min.

Zur Rekristallisationsglühung wird das Kupferband 1 nach dem Passieren einer Umlenkrolle 2 von oben nach unten vertikal durch einen Durchlaufglühofen 3 geführt. Die Heizzonentemperatur des Durchlaufglühofens 3 beträgt etwa 600 bis 750 °C.

Am unteren Ende des Durchlaufglühofens 3 wird das Kupferband 1 mittels einer Umlenkrolle 4 aus dem Durchlaufglühofen 3 abgelenkt und nach dem Passieren einer weiteren Umlenkrolle 5 durch eine Vorrichtung 6 geführt, in welcher die Härte des Kupferbands 1 ermittelt wird. Zwei Andrückrollen 7, 8 vor und hinter der Vorrichtung 6 sorgen dafür, daß das Kupferband 1 über einen Umschlingungswinkel α von mindestens etwa 20° bogenförmig flächig an eine um eine horizontale sich quer zur Laufrichtung LR des Kupferbands 1 erstreckende Achse 9 rotierende Auflagerrolle 10 gedrückt wird.

Letztlich wird das Kupferband 1 von einem Aufwickelhaspel 11 wieder zu einem Coil gewickelt.

Zwischen der Vorrichtung 6 zur Ermittlung der Härte des Kupferbands 1 und dem Aufwickelhaspel 11 kann ein nicht dargestelltes Walzgerüst angeordnet sein, in dem mit definiertem Abwalzgrad ein Härtestich auf das Kupferband 1 gewalzt wird.

Die Umlenkrollen 2, 4 und 5, die Andrückrollen 7 und 8 sowie die Auflagerrolle 10 sind mit einem harten Kunststoff beschichtet, um Beschädigungen des Kupferbands 1 zu vermeiden.

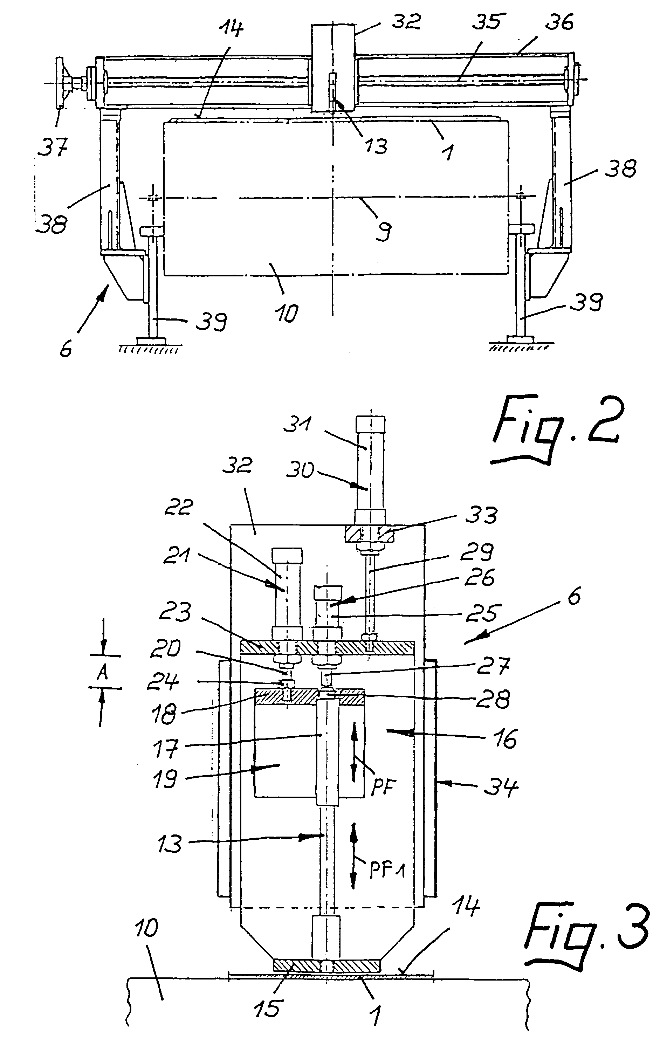

Die Vorrichtung 6 zur Ermittlung der Härte des Kupferbands 1 geht aus den Figuren 2 und 3 näher hervor. Sie umfaßt ein oberhalb der Auflagerrolle 10 angeordnetes und nach der Kugelrücksprungmethode wirksames Härteprüfgerät 13. Dieses Härteprüfgerät 13 ist über eine nicht näher dargestellte Auswerte- und Steuereinheit mit einem ebenfalls nicht näher dargestellten Regelaggregat des Durchlaufglühofens 3 und/oder dem Antrieb des Aufwickelhaspels 11 gekoppelt. Es weist eine nicht näher dargestellte Prüfkugel auf, die aus einer Bereitschaftsposition beim Durchlaufen des Kupferbands 1 gegen dessen Oberfläche 14 geschleudert wird und wieder von der Oberfläche 14 zurückprallt. Aus den Meßwerten von Aufprall- und Rückprallgeschwindigkeit der Prüfkugel wird der Härtewert ermittelt, der dann zur Regelung der Geschwindigkeit des Kupferbands 1 und/oder zur Regelung der Ofentemperatur herangezogen wird.

Wie die Figur 3 näher zeigt, ist das Härteprüfgerät 13 auf dem unteren horizontalen Schenkel 15 einer im Längsschnitt U-förmigen Konsole 16 befestigt. Dieser Schenkel 15 erstreckt sich in der Meßsituation knapp oberhalb des Kupferbands 1.

Das Härteprüfgerät 13 umfaßt einen Spannteil 17, der an einem horizontalen Schenkel 18 eines winkelförmigen Tragkörpers 19 festgelegt ist, der entsprechend dem Doppelpfeil PF zwangsgeführt relativ zur Konsole 16 verlagerbar ist.

An dem horizontalen Schenkel 18 des Tragkörpers 19 ist ferner die Kolbenstange 20 eines doppelt wirkenden Pneumatikzylinders 21 befestigt, dessen Zylindergehäuse 22 auf dem oberen horizontalen Schenkel 23 der Konsole 16 festgelegt ist. Eine Einstellmutter 24 ermöglicht die genaue Justierung des Abstands A zwischen den horizontalen Schenkeln 18 und 23 von Tragkörper 19 und Konsole 16.

Der obere horizontale Schenkel 23 der Konsole 16 dient außerdem der Festlegung des Zylindergehäuses 25 eines doppelt wirkenden Pneumatikzylinders 26, der über seine Kolbenstange 27 mit dem Auslösekopf 28 des Härteprüfgeräts 13 in Berührungskontakt gelangen kann.

Mit dem oberen horizontalen Schenkel 23 der Konsole 16 ist auch die Kolbenstange 29 eines weiteren doppelt wirkenden Pneumatikzylinders 30 verbunden, dessen Zylindergehäuse 31 an einem von einer vertikalen Basisplatte 32 horizontal vorstehenden Schenkel 33 lagearretiert ist. Mit Hilfe dieses Pneumatikzylinders 30 kann die gesamte Konsole 16 zwangsgeführt entsprechend dem Doppelpfeil PF1 vertikal an der Basisplatte 32 entlang verlagert werden. Dies ist beispielsweise dann der Fall, wenn der Anfang und das Ende des Kupferbands 1 die Härtemeßvorrichtung 6 passieren. Hierbei ist es zweckmäßig, einen größeren Abstand zwischen dem unteren horizontalen Schenkel 15 der Konsole 16 und dem Kupferband 1 herzustellen, um Beschädigungen des Härteprüfgeräts 13 zu vermeiden.

Das Härteprüfgerät 13 ist gemäß Figur 2 in Längsrichtung der Achse 9 der Auflagerrolle 10 verlagerbar. Hierzu dient eine sich parallel zur Achse 9 erstreckende Gewindespindel 35 in einem U-förmigen Gehäuse 36, die auf einen Tragkörper 34 der Vorrichtung 6 einwirkt. An einem Ende der Gewindespindel 35 befindet sich ein Handrad 37. Mit Hilfe dieses Handrads 37 kann dann das Härteprüfgerät 13 gezielt während des Durchlaufs des Kupferbands 1 bestimmte Meßpunkte anfahren.

Das U-förmige Gehäuse 36 stützt sich auf stirnseitig der Auflagerrolle 10 vorgesehenen Konsolen 38 ab, die mit den Stützen 39 verbunden sind, welche auch die Auflagerrolle 10 tragen.

Nach dem Passieren des Anfangs des Kupferbands 1 wird die hochgefahrene Konsole 16 mit Hilfe des Pneumatikzylinders 30 entsprechend dem Pfeil PF1 so weit abwärts gefahren, daß sich der untere horizontale Schenkel 15 nur knapp oberhalb der Oberseite 14 des Kupferbands 1 befindet. Nunmehr wird durch den Pneumatikzylinder 21 der Tragkörper 19 gemäß dem Pfeil PF nach unten gefahren und damit über den Spannteil 17 eine im Härteprüfgerät 13 befindliche nicht näher veranschaulichte Druckfeder gespannt. Nach dem Spannen fährt die Kolbenstange 20 des Pneumatikzylinders 21 in ihre Ausgangslage zurück.

Die Kolbenstange 27 des Pneumatikzylinders 26 steht in keinem Kontakt mit dem Auslösekopf 28 des Härteprüfgeräts 13.

Zur Härtemessung wird der Pneumatikzylinder 26 aktiviert. Die Kolbenstange 27 gelangt in einen Kontakt mit dem Auslösekopf 28 und sorgt dafür, daß die Druckfeder im Härteprüfgerät 13 entspannt wird, so daß die Prüfkugel gegen die Oberfläche 14 des Kupferbands 1 geschleudert wird. Von dieser prallt sie zurück. Aufprall- und Rückprallgeschwindigkeit werden berührungslos gemessen. Dies kann so erfolgen, daß ein die Prüfkugel tragender Schlagkörper im Härteprüfgerät 13 mit einem Permanentmagnet versehen wird, der während des Prüfschlags eine Spule durchfährt und während der Vor- und Rückwärtsbewegung elektrische Spannungen induziert, welche sich proportional zu den Aufprall- und Rückprallgeschwindigkeiten verhalten. Die Meßwerte aus der Aufprall- und Rückprallgeschwindigkeit werden dann zu einem Härtewert verarbeitet. Dieser kann wie vorstehend geschildert zur Steuerung und/oder Regelung der Ofentemperatur bzw. zur Geschwindigkeit des Kupferbands 1 herangezogen werden, um die Härtestreuung aller den Durchlaufglühofen 3 passierenden Kupferbänder 1 zu reduzieren und annähernd einheitliche Qualitäten zu schaffen.

### Bezugszeichenaufstellung

1 - Kupferband
2 - Umlenkrolle
3 - Durchlaufglühofen
4 - Umlenkrolle
5 - Umlenkrolle
6 - Härtemeßvorrichtung
7 - Andrückrolle
8 - Andrückrolle
9 - Achse v. 10
10 - Auflagerrolle
11 - Aufwickelhaspel

13 - Härteprüfgerät
14 - Oberfläche v. 1
15 - unterer Schenkel v. 16
16 - Konsole
17 - Spannteil v. 13
18 - Schenkel v. 19
19 - Tragkörper
20 - Kolbenstange v. 21
21 - Pneumatikzylinder
22 - Zylindergehäuse v. 21
23 - oberer Schenkel v. 16
24 - Einstellmutter
25 - Zylindergehäuse v. 26
26 - Pneumatikzylinder
27 - Kolbenstange v. 26
28 - Auslösekopf v. 13
29 - Kolbenstange v. 30
30 - Pneumatikzylinder
31- Zylindergehäuse v. 30
32- Basisplatte
33- Schenkel an 32
34- Tragkörper v. 6
35- Gewindespindel
36- Gehäuse
37- Handrad
38- Konsolen
39- Stützen

α- Umschlingungswinkel
A- Abstand zw. 18 u. 23
LR- Laufrichtung v. 1
PF- Doppelpfeil
PF1- Doppelpfeil

## Patentansprüche

1. Verfahren zur Ermittlung der Härte von sich zwischen einer Behandlungsanlage (3), insbesondere einem Durchlaufglühofen, und einem Aufwickelhaspel (11) bewegendem band- oder drahtförmigem metallischen Durchlaufmaterial (1), insbesondere Kupferband, **dadurch gekennzeichnet,** daß das Durchlaufmaterial (1) mit definierter konstanter Zugkraft im bogenförmigen Kontakt über ein rotierendes Auflager (10) geführt und im Scheitelpunkt des Auflagers (10) mit der Prüfkugel eines nach der Kugelrücksprungmethode wirksamen Härteprüfgeräts (13) beaufschlagt wird, wobei der aus den Meßwerten von Aufprall- und Rückprallgeschwindigkeit der Prüfkugel ermittelte Härtewert zur Regelung der Geschwindigkeit des Durchlaufmaterials (1) und/oder der Behandlungscharakteristik der Behandlungsanlage (3) herangezogen wird.

2. Vorrichtung zur Durchführung des Verfahrens nach Patentanspruch 1, **gekennzeichnet durch** eine zwischen der Behandlungsanlage (3) und dem Aufwickelhaspel (11) angeordnete sowie um eine sich quer zur Laufrichtung (LR) des Durchlaufmaterials (1) erstreckenden Achse (9) rotierende Auflagerrolle (10), zwei der Auflagerrolle (10) vor- bzw. nachgeschaltete, das Durchlaufmaterial (1) scheitelseitig bogenförmig an die Auflagerrolle (10) pressende Andrückrollen (7, 8) und ein nach der Kugelrücksprungmethode wirksames Härteprüfgerät (13) oberhalb der Auflagerrolle (10), welches über eine Auswerte- und Steuereinheit mit dem Regelaggregat der Behandlungsanlage (3) und/oder dem Antrieb des Aufwickelhaspels (11) gekoppelt ist.

3. Vorrichtung nach Patentanspruch 2**, dadurch gekennzeichnet,** daß die Auflagerrolle (10) und die Andrückrollen (7, 8) mit einem harten Kunststoff beschichtet sind.

4. Vorrichtung nach Patentanspruch 2 oder 3, **dadurch gekennzeichnet,** daß das Härteprüfgerät (13) in Längsrichtung der Achse (9) der Auflagerrolle (10) verstellbar und in der jeweiligen Verstellposition lagearretierbar ist.

5. Vorrichtung nach einem der Patentansprüche 2 bis 4, **dadurch gekennzeichnet,** daß das Härteprüfgerät (13) an einer quer zur Achse (9) der Auflagerrolle (10) verlagerbaren Konsole (16) befestigt ist.

6. Vorrichtung nach Patentanspruch 5, **dadurch gekennzeichnet,** daß die Konsole (16) durch einen Druckmittelzylinder (30) relativ zu einem ortsfesten Widerlager (32) verstellbar ist.

7. Vorrichtung nach einem der Patentansprüche 2 bis 6, **dadurch gekennzeichnet,** daß das Härteprüfgerät (13) einen Spannteil (17) aufweist, welcher an einem in Verstellrichtung der Konsole (16) zwangsgeführten Tragkörper (19) befestigt ist, der über einen Druckmittelzylinder (21) mit der Konsole (16) verbunden ist.

8. Vorrichtung nach Patentanspruch 7, **dadurch gekennzeichnet,** daß der Abstand (A) zwischen der Konsole (16) und dem Tragkörper (19) einstellbar ist.

9. Vorrichtung nach einem der Patentansprüche 2 bis 8, **dadurch gekennzeichnet,** daß das Härteprüfgerät (13) durch einen an der Konsole (16) fixierten Druckmittelzylinder (26) aktivierbar ist.

## Claims

1. Method for determining the hardness of continuous metallic material (1) in strip or wire form, in particular copper strip, moving between a processing installation (3), in particular a continuous annealing furnace, and a winding reel (11), characterised in that the continuous material (1) is guided with defined constant tension in curved contact over a rotating support (10) and at the vertex of the support (10) is subjected to the action of the test ball of a hardness testing apparatus (13) working by the ball rebound method, the hardness value established from the measurements of impact and rebound speed of the test ball being used to control the speed of the continuous material (1) and/or the processing characteristics of the processing installation (3).

2. Device for implementing the method according to patent claim 1, characterised by a support roller (10) disposed between the processing installation (3) and the winding reel (11) and rotating about an axis (9) extending at right angles to the direction of travel (LR) of the continuous material (1), by two contact rollers (7, 8) disposed before and after the support roller (10) and pressing the continuous material (1) against the support roller (10) in a curve on the vertex side, and by a hardness testing apparatus (13) working by the ball rebound method which is disposed above the support roller (10) and is coupled through an evaluating and control unit to the regulating system of the processing installation (3) and/or the drive of the winding reel (11).

3. Device according to patent claim 2, characterised in that the support roller (10) and the contact rollers (7, 8) are coated with a hard plastic.

4. Device according to patent claim 2 or 3, characterised in that the hardness testing apparatus (13) is adjustable in the longitudinal direction of the axis (9) of the support roller (10) and lockable in the particular adjustment position.

5. Device according to one of patent claims 2 to 4, characterised in that the hardness testing apparatus (13) is fixed to a bracket (16) displaceable at right angles to the axis (9) of the support roller (10).

6. Device according to patent claim 5, characterised in that the bracket (16) is adjustable by a pressure medium cylinder (30) relative to a fixed abutment (32).

7. Device according to one of patent claims 2 to 6, characterised in that the hardness testing apparatus (13) exhibits a clamping part (17) which is fixed to a carrier (19) which is forcibly guided in the adjusting direction of the bracket (16) and is connected by means of a pressure medium cylinder (21) to the bracket (16).

8. Device according to patent claim 7, characterised in that the distance (A) between the bracket (16) and the carrier (19) is adjustable.

9. Device according to one of patent claims 2 to 8, characterised in that the hardness testing apparatus (13) can be activated by a pressure medium cylinder (26) fixed to the bracket (16).

## Revendications

1. Procédé de détermination de la dureté d'un matériau métallique défilant en forme de bande ou de fil, en particulier un feuillard de cuivre, entre une installation de traitement (3), en particulier un four de recuit, et une enrouleuse (11),
caractérisé en ce que,
le matériau défilant (1) passe sous une traction constante sur un cylindre d'appui (10) avec contact selon un arc de cercle et, au sommet de ce cylindre (10), est soumis à l'action de la bille d'un appareil de contrôle de dureté fonctionnant selon la méthode à rebond de bille, la valeur de la dureté établie à partir des valeurs mesurées des vitesses d'impact et de rebond de la bille étant utilisée pour réguler la vitesse du matériau défilant (1) et/ou la courbe de fonctionnement de l'installation de traitement (3).

2. Dispositif pour la mise en oeuvre du procédé selon la revendication 1,
caractérisé en ce que :
- entre l'installation de traitement (3) et l'enrouleuse (11) se trouve un cylindre d'appui (10) dont l'axe de rotation (9) est perpendiculaire à la direction de circulation (LR) du matériau défilant (1),
- en amont et en aval du cylindre (10) se trouvent respectivement deux cylindres de contact (7, 8), mettant le matériau défilant (1) en application, selon un arc de cercle, sur le sommet du cylindre d'appui (10), et
- au-dessus du cylindre (10) se trouve un appareil de contrôle de dureté fonctionnant selon la méthode à rebond de bille et qui est associé, par l'intermédiaire d'une unité d'exploitation et de commande, à la régulation de l'installation de traitement (3) et/ou à l'entraînement de l'enrouleuse (11).

3. Dispositif selon la revendication 2,
caractérisé en ce que,
le cylindre d'appui(10) et les cylindres de contact (7, 8) sont recouverts d'une couche de matière plastique dure.

4. Dispositif selon les revendications 2 ou 3,
caractérisé en ce que,
l'appareil de contrôle de dureté (13) peut se déplacer parallèlement à l'axe (9) du cylindre d'appui (10) et être immobilisé dans toute position de réglage.

5. Dispositif selon l'une des revendications 2 à 4,
caractérisé en ce que,
l'appareil de contrôle de dureté (13) est fixé sur une console (16) mobile perpendiculairement à l'axe (9) du cylindre (10).

6. Dispositif selon la revendication 5,
caractérisé en ce que,
la console (16) peut se déplacer par rapport à un autre palier (32) fixe sous l'action d'un vérin (30) alimenté par un fluide sous pression.

7. Dispositif selon l'une des revendications 2 à 6,
caractérisé en ce que,
l'appareil de contrôle de dureté (13) comporte une pièce de tension (17) fixée à un support (19) mobile parallèlement à la direction de déplacement de la console (16) et relié à celle-ci par un vérin (21) alimenté par un fluide sous pression.

8. Dispositif selon la revendication 7,
caractérisé en ce que,
la distance (A) séparant la console (16) du support (19) est réglable.

9. Dispositif selon une des revendications 2 à 8,
caractérisé en ce que,
l'appareil de contrôle de dureté (13) peut être mis en action par l'intermédiaire d'un vérin (26) alimenté en fluide sous pression et fixé à la console (16).
